**Europäisches Patentamt**

**European Patent Office**

**Office européen des brevets**

(19)

(11) Numéro de publication : **0 461 950 A1**

# (12) DEMANDE DE BREVET EUROPEEN

(21) Numéro de dépôt : **91401428.7**

(22) Date de dépôt : **31.05.91**

(51) Int. Cl.⁵ : **B01J 37/03, C01B 13/36, C01F 17/00, // C04B38/00**

(30) Priorité : **13.06.90 FR 9007321**

(43) Date de publication de la demande :
**18.12.91 Bulletin 91/51**

(84) Etats contractants désignés :
**AT BE CH DE DK ES FR GB GR IT LI LU NL SE**

(71) Demandeur : **RHONE-POULENC CHIMIE**
**25, quai Paul Doumer**
**F-92408 Courbevoie Cédex (FR)**

(72) Inventeur : **Bouruet-Aubetot, Alain**
**12 rue Briére de Boismont**
**F-94160 Saint Mande (FR)**
Inventeur : **Chopin, Thierry**
**44 rue Auguste Poullain**
**F-98200 Saint Denis (FR)**
Inventeur : **Touret, Olivier**
**11 rue Bordier**
**F-93300 Aubervilliers (FR)**

(74) Mandataire : **Esson, Jean-Pierre**
**RHONE-POULENC CHIMIE Service Brevets**
**Chimie 25, quai Paul Doumer**
**F-92408 Courbevoie Cedex (FR)**

(54) **Matériau à matrice poreuse contenant un second élément sous forme dispersée et procédé de fabrication.**

(57)     Matériau comprenant une matrice poreuse constituée en au moins un oxyde d'élément métallique contenant de manière dispersée des particules d'oxyde d'au moins un second élément métallique et se caractérisant en ce que les particules dudit second élément métallique présente une augmentation de leur dimension moyenne égale au plus à 1000 % entre la dimension moyenne de ces particules après un traitement thermique à 350°C pendant 4 heures et celle des particules après un traitement thermique à 1100°C pendant 4 heures.
     Procédé de fabrication de ce matériau par coprécipitation.

EP 0 461 950 A1

La présente invention concerne un matériau comprenant une matrice poreuse comportant, sous forme dispersée, un second élément.

Elle se rapporte plus particulièrement à un matériau comprenant une matrice poreuse en oxyde minéral tel que par exemples l'alumine comprenant un oxyde d'un second élément métallique dispersé sous forme de particules de dimension moyenne stable thermiquement.

De nombreux matériaux ont déjà été proposés, notamment dans la catalyse hétérogène des procédés de synthèse ou dans les procédés de traitement des gaz, comme par exemple dans les procédés de traitement des gaz d'échappement de moteur à combustion interne. Ces matériaux comprennent généralement une matrice poreuse dans laquelle sont dispersés les éléments catalytiques ou des éléments additifs comme des promoteurs, stabilisateurs ou analogue.

Pour que l'activité catalytique soit la plus élevée possible, le matériau doit présenter une surface spécifique élevée, mais également une très bonne dispersabilité des éléments catalytiques ou additifs. En d'autres termes, la surface des éléments catalytiques ou additifs doit être la plus élevée possible.

Cette surface est une fonction directe de la dimension moyenne des particules desdits éléments catalytiques ou additifs dispersées dans la matrice poreuse.

Les matériaux connus présentent une bonne dispersabilité des éléments catalytiques ou additifs. Toutefois, quand ces matériaux sont traités thermiquement à température élevée pour obtenir une stabilisation de ceux-ci et notamment de leur surface, on observe un accroissement important de la taille des particules d'éléments catalytiques ou d'additifs dispersées. Cet accroissement, dû au frittage de ces particules entre elles, diminue fortement l'activité catalytique du matériau.

La présente invention a notamment pour but de remédier à ces inconvénients en proposant un matériau formé par une matrice poreuse comprenant sous forme dispersée, des particules d'un second composant, et dont l'accroissement de la dimension moyenne de ces particules est faible pour des traitements thermiques à température élevée.

A cet effet, l'invention propose un matériau comprenant une matrice poreuse constituée par au moins un oxyde d'élément métallique tel que par exemple l'alumine, contenant de manière dispersée des particules d'oxyde d'au moins un second élément métallique. Ce matériau se caractérise en ce que les particules d'oxyde du second élément métallique présentent une augmentation de leur dimension moyenne égale au plus à 1000 % entre la dimension moyenne de celles-ci après un traitement thermique à 350°C pendant 4 heures et celle de ces particules après un traitement thermique à 1100°C pendant 4 heures.

Avantageusement cette augmentation de dimension moyenne est comprise entre 300 % et 800 %.

Cette faible augmentation de la taille des particules peut s'expliquer, sans que cela limite la portée de l'invention, par un taux de frittage plus faible des oxydes du second élément dû notamment à la faible mobilité des particules dans la matrice et au piégeage de celles-ci dans la structure cristalline de la matrice poreuse.

Selon un mode de réalisation de l'invention, le second élément métallique ne donne pas de composé chimique ou solution solide avec le matériau formant la matrice. Ainsi, les particules dispersées sont constituées uniquement par de l'oxyde du second élément.

Toutefois, le second élément peut partiellement se combiner chimiquement avec la matrice, pour donner soit un sel complexe, soit une solution solide, sans pour cela sortir du cadre de l'invention.

Selon une autre caractéristique de l'invention, la concentration pondérale en oxyde du second élément dans le matériau est comprise entre 5 % et 70 %, la concentration pondérale en oxyde minéral formant la matrice étant comprise entre 95 % et 30 %

Avantageusement la concentration en second élément est comprise entre 7 % et 55 %.

Parmi les oxydes minéraux convenables pour l'invention comme composé pour former la matrice poreuse, on peut citer, à titre d'exemple, l'alumine, la silice, l'oxyde de zirconium, l'oxyde de titane, un mélange de ceux-ci ou analogues.

Parmi ces oxydes, les oxydes préférés de l'invention sont l'alumine, la silice.

Comme oxyde du second élément métallique convenable pour l'invention, on peut citer, à titre d'exemple, les éléments de la famille des lanthanides, y compris l'yttrium, et plus particulièrement le cérium, le lanthane, le praséodyme, le néodyme, les alcalino-terreux comme le baryum, le molybdène, le vanadium ou analogues.

Dans le cas où l'oxyde du second élément est l'oxyde de cérium et la matrice l'alumine, la dimension moyenne des particules d'oxyde de cérium est de 5 nm à 350°C et 20 nm à 1100°C.

Avantageusement dans ce cas, la concentration pondérale en oxyde de cérium est comprise entre 5 % et 70 %, de préférence entre 7 % et 50 %.

Le matériau de l'invention est notamment convenable pour la réalisation d'un catalyseur, par exemple d'un catalyseur pour le traitement des gaz d'échappement des moteurs à combustion interne. En effet, la très grande stabilité thermique des particules dispersées dans la matrice poreuse permet de conserver un effet catalytique important même si le catalyseur se trouve soumis à une température élevée, ce qui est fréquent dans ce domaine d'application.

Par ailleurs, la bonne dispersabilité de l'oxyde de cérium, par exemple, permet une meilleure dispersabilité des éléments métalliques comme les métaux précieux.

Ces améliorations de dispersabilité sont notamment montrées par la mesure de la capacité de stockage d'oxygène dans le cas de l'oxyde de cérium.

L'invention a également pour objet un procédé de fabrication du matériau selon l'invention.

Ce procédé consiste à coprécipiter l'élément métallique formant la matrice et le second élément métallique sous forme d'un précurseur d'oxyde, à récupérer le matériau précipité et à le calciner après un séchage éventuel.

Selon une autre caractéristique de l'invention, la précipitation des matériaux est réalisée sous forme d'hydroxyde, d'hydrate, d'oxyde ou de carbonate, la différence entre les pH de précipitation de chacun des éléments formant le matériau (l'élément de la matrice et le second élément) dans les conditions et le milieu de coprécipitation, est avantageusement inférieure à 0,5 unité de pH.

Avantageusement, le procédé peut comprendre une étape de développement cristallin de la matrice. Par exemple, cette étape peut être un traitement hydrothermal du coprécipité.

Par l'expression "traitement hydrothermal", on entend un maintien de la composition à des conditions de température et pression déterminées pendant une durée suffisante pour qu'une phase cristalline se développe.

Ainsi, selon un mode de réalisation de l'invention, ce traitement hydrothermal est réalisé par un séchage du précipité avec élimination continue des vapeurs émises.

Cette élimination en continue des vapeurs émises peut être obtenue par un séchage sous pression réduite ou sous pression atmosphérique avec un balayage des vapeurs par un courant gazeux, par exemple, un flux d'air ou de gaz inerte (azote) à la surface ou à travers le précipité disposé dans une étuve.

La température de séchage du précipité est avantageusement comprise entre 50°C et 150°C. Cette température sera d'autant plus élevée que la pression sera élevée.

La pression est, à titre indicatif, inférieure à 10000 Pa, avantageusement comprise entre 1000 et 10000 Pa.

La durée du séchage est de l'ordre de 1 heure à 100 heures.

Selon un second mode de réalisation, le traitement hydrothermal est réalisé à une température comprise entre 30°C et 100°C, soit en présence de vapeur d'eau avec une pression supérieure à la pression atmosphérique, soit le produit étant mis en suspension ou repulpé dans de l'eau. La durée de ce traitement est avantageusement inférieure à 2 heures, de préférence de l'ordre de quelques minutes à 1h30. Ce produit est ensuite séché soit par l'un des procédés décrits ci-dessus, soit par un procédé de séchage rapide comme, par exemple, l'atomisation.

Le produit ainsi traité est ensuite calciné à des températures variables comprises entre 300°C et 1200°C.

Selon un mode de réalisation préféré de l'invention, un procédé de fabrication du matériau convenable pour l'invention consiste à réaliser une solution d'un ou plusieurs composés solubles de l'élément formant la matrice, par exemple un sel, avec un ou plusieurs composés du ou des seconds éléments, par exemple des sels de ces composés.

Comme composés solubles de l'élément formant la matrice on peut citer les chlorure, nitrate, sulfate.

Comme composés solubles du second élément, on peut citer à titre d'exemple les nitrate, acétate, chlorure.

Dans une première étape, appelée étape de précipitation, un agent précipitant est mélangé avec la solution de composés solubles. Cet agent précipitant comprend des ions carbonates, oxalates et/ou carboxylates et des ions hydroxyles.

Selon un mode de réalisation préféré l'agent précipitant a un pH compris entre 3,5 et 9, avantageusement entre 4 et 8.

Cette solution de précipitation est obtenu par addition d'un agent de basification, par exemple une base, dans une solution de carbonate ou d'hydrogénocarbonate, par exemple.

Comme base convenable on peut citer les hydroxydes d'alcalins ou d'alcalino-terreux, l'ammoniac. Ce dernier est préféré car l'anion ammonium peut être facilement éliminé.

Selon une autre caractéristique de l'invention, la solution de précipitation contient des ions $(CO_3)^=$ et OH- dans un rapport $(CO_3)^=/OH^-$ compris entre 0,25 et 4.

Selon une autre caractéristique de l'invention, et notamment quand le second élément est le cérium, celui-ci est avantageusement présent sous forme de cérium à l'état d'oxydation 3+.

Les concentrations en élément formant la matrice et en second élément de la solution ne sont pas critiques et peuvent varier dans de grandes limites. Toutefois, avantageusement la concentration totale en élément formant la matrice et du second élément est comprise entre 0,1 mole/l et 4 mole/l.

La concentration en agent précipitant dans la solution de précipitation n'est pas critique, et est notamment limitée par les coefficients de solubilité des composés utilisés.

Le mélange de la solution de précipitation avec la solution contenant les composés solubles peut être effectué de manière quelconque.

Avantageusement, ce mélange est obtenu par addition de la solution de précipitation dans la solution de composés solubles avec agitation de cette dernière.

Ce mélange peut être réalisé de manière continue ou discontinue, à une température pouvant varier dans de grandes limites, avantageusement cette coprécipitation est réalisée à une température comprise entre la température ambiante (15°C - 25°C) et 100°C, de préférence entre 20°C et 60°C.

Par ailleurs, la quantité de solutions mélangées ou les débits des solutions et concentrations des espèces dans ces solutions sont déterminés pour que la quantité d'agent précipitant par rapport aux espèces à précipiter soit au moins égale à la quantité stoechiométrique, avantageusement supérieure de 5 à 10 % à celle-ci.

Selon un mode de réalisation préféré de l'invention, le coprécipité est obtenu par mélange d'une solution contenant les composés solubles avec une solution de carbonate d'ammonium dont le pH a été fixé par addition d'ammoniaque.

Le coprécipité obtenu dans le procédé de l'invention comprend dans le cas où l'élément formant la matrice est l'alumine, une alumine principalement sous forme amorphe.

Le précipité obtenu est ensuite filtré. Il peut également être soumis à un ou plusieurs lavages. Toutefois, ceux-ci ne sont pas obligatoires.

Cette alumine sera cristallisée sous forme pseudoboehmite notamment au cours du "traitement hydrothermal" du coprécipité, appelé également étape de mûrissement du précipité, décrit précédemment, avant séchage et calcination.

La texture du composé est ensuite déterminée, ainsi que la taille des particules de l'oxyde du second élément, par exemple, par analyse aux rayons X et analyse au microscope électronique à transmission.

## EXEMPLE 1

Cet essai est réalisé avec un mélange d'une solution contenant 0,939 mole/l de nitrate d'aluminium et 0,068 mole/l de nitrate de cérium et d'une solution contenant 2,773 mole/l de $NH_4HCO_3$ et 0,881 mole/l d'ammoniaque.

Le débit des deux solutions est fixé pour obtenir un rapport $NH_4^+/NO_3^-$ voisin de 1,05.

La précipitation est réalisée sous agitation et à une température de 25°C. Le mélange a un pH variant entre 5,6 et 6,3.

Le précipité est ensuite lavé par de l'eau. Le lavage permet d'éliminer les ions $NO_3^-$ et $NH_4^+$ présents dans le gâteau. Ainsi, le lavage est avantageusement poursuivi tant que la concentration pondérale en nitrate et ammonium dans le précipité est inférieur à 0,2 %.

Le précipité ainsi recueilli est soumis à un mûrissement par repulpage du précipité dans de l'eau (6 % de précipité) pendant 15 minutes à 100°C.

Le produit est ensuite séché par atomisation à 150°C puis calciné à différentes températures.

Le produit obtenu après calcination de 2 heures à 350°C présente un volume poreux de 1,6 $cm^3/g$ pour des pores ayant un diamètre compris entre 10 nm et 100 nm (diamètre moyen égal à 30 nm). Ce volume poreux représente 85 % du volume poreux des pores de diamètre inférieur à 100 nm. Les particules de $CeO_2$ ont un diamètre moyen déterminé par RX de 5 nm.

Après calcination à 1100°C pendant 4 heures, la surface spécifique est de 70 $m^2/g$ et le volume poreux total de 0,9 $cm^3/g$ pour des pores de diamètre voisin de 40 nm (diamètre compris entre 20 nm et 100 nm).

Ce volume poreux représente 95 % du volume poreux correspondant à des pores de diamètre inférieur à 100 nm.

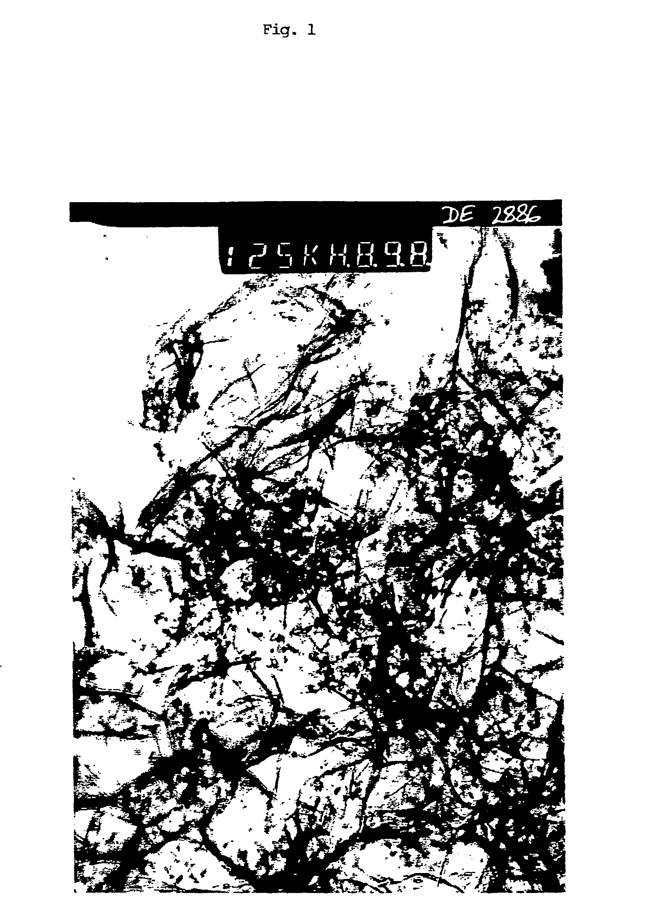

Le matériau obtenu comprend 20 % de $CeO_2$ dans la matrice de $Al_2O_3$ sous forme de particules de $CeO_2$ dispersées dans les voiles formées par l'alumine sous forme pseudoboehmite. Cette texture est illustrée à la figure 1.

Ces particules d'oxyde de cérium ont un diamètre moyen de 19 nm après calcination à 1100°C pendant 4 heures, correspondant à une augmentation de taille de 300 %.

## Exemple 2

L'exemple est répété mais en utilisant une solution contenant 0,300 mole/l de nitrate de cérium et 0,594 mole/l de nitrate d'aluminium.

La précipitation est réalisée dans les conditions décrites dans l'exemple 1.

Le produit obtenu qui contient 50 % en poids de $CeO_2$ présente une surface spécifique, après calcination à 350°C pondant 4 heures, égale à 160 $m^2/g$ . La taille des particules d'oxyde de cérium est de 5 nm.

Après calcination pendant 4 heures à 1100°C, la surface spécifique est égale à 30 m²/g tandis que la taille des particules d'oxyde de cérium est de 25 nm. L'augmentation de la taille des particules de $CeO_2$ est donc de 400 %.

Exemple 3 comparatif

On mélange un gel d'alumine (commercialisé sous la dénomination commerciale VERSAL 250) avec un hydrate d'oxyde de cérium. Le produit obtenu est séché et calciné, il contient 20 % en poids de $CeO_2$.

La taille des particules d'oxyde de cérium après calcination à 350°C pendant 4 heures est de 4 nm, mais après calcination à 1100°C cette taille est très supérieure à 50 nm, ce qui représente une augmentation de taille nettement supérieure à 1000 %.

Par ailleurs, la surface spécifique de ce produit est de 50 m²/g à 1100°C.

Cette différence de taille des particules d'oxyde de cérium est également mis en évidence par mesure de la capacité de stockage d'oxygène du matériau.

Cette capacité de stockage d'oxygène est déterminée selon le test suivant :
– on soumet une masse de matériau (0,3 g) à un flux de gaz, de l'hélium sous 2 bar et selon un débit de 10 l/h.

Dans ce gaz porteur sont injectés sous forme de pulse soit de l'oxyde de carbone (CO) à une concentration de 5 %, soit de l'oxygène à une concentration de 2,5 %.

On effectue le test selon la séquence suivante :
– montée en température à 400°C sous hélium
– envoi d'une série de pulses d'oxygène
– envoi d'une série de pulses de CO
– envoi d'une nouvelle série de pulses de $O_2$
– envoi en alternance de pulses de CO et de $O_2$

Pour déterminer et apprécier la capacité de stockage on mesure :
– le pourcentage de CO converti pendant le 1° pulse de la série de pulses de CO
– consommation cumulée de CO par gramme de $CeO_2$ après la série de pulses de CO
– consommation moyenne de CO par gramme de $CeO_2$ pour chaque pulse de la série de pulses alternées de CO et $O_2$.

Deux matériaux ont été testés :
. matériau A conforme à l'invention (exemple 1) calciné à 850°C,
. matériau B obtenu par mélange d'un gel d'alumine (commercialisé sous la dénomination commerciale VERSAL 250) avec un hydrate d'oxyde cérium. Le produit obtenu est séché et calciné à 850°C (exemple 3).

Les résultats sont rassemblés dans le tableau ci-dessous.

| MATERIAU | Pendant la 1ère série de pulses | | consommation cumulée | | Alternée | |
|---|---|---|---|---|---|---|
| | % CO converti au 1° pulse | mlCO/gCeO2 | mlCO/gCeO2 | CeOx | mlCO/gCeO2 | CeOx |
| A | 23, 4 % | 5,85 | 10,85 | x:1,91 | 5,94 | 1,95 |
| B | 9,7 % | 2,43 | 4,63 | x:1,96 | 2,68 | 1,98 |

Ces résultats démontrent clairement que la quantité d'oxygène stocké par l'oxyde de cérium, c'est à dire disponible pour transformer le monoxyde de carbone en dioxyde est plus importante avec le matériau A conforme à l'invention. Ceci peut être expliqué par la taille des particules de $CeO_2$ dispersées dans le matériau A qui est plus petite que la taille de celles dispersées dans le matériau B.

Exemples 4 et 5 (comparatif)

L'exemple 1 est répété mais en utilisant une solution de nitrate de titane à la place de la solution de nitrate de cérium.

Les conditions de mise en oeuvre du procédé sont identiques.

Un exemple comparatif a été réalisé par imprégnation d'un gel d'alumine commercialisé sous le nom commercial VERSAL 250, par une solution de nitrate de titane, puis calcination du produit obtenu.

Une analyse par rayons X montre que le produit contient des particules d'oxyde de titane sous forme anatase et/ou rutile, après une calcination à 850°C, la forme utile préexistant après une calcination de 4 heures à 1200°C.

Le diamétre moyen des particules d'oxyde de titane sous forme anatase après calcination à 850°C pendant 6 heures est de 16 nm dans le cas de l'invention et de 18 nm pour l'exemple comparatif.

Après calcination à 1200°C pendant 4 heures, le diamétre moyen est de 100 nm pour l'invention tandis qu'il est égal à 140 nm dans l'exemple comparatif.

## Revendications

1/ Matériau comprenant une matrice poreuse constituée en au moins un oxyde d'élément métallique contenant de manière dispersée des particules d'oxyde d'au moins un second élément métallique caractérisé en ce que les particules dudit second élément métallique présente une augmentation de leur dimension moyenne égale au plus à 1000 % entre la dimension moyenne de ces particules après un traitement thermique à 350°C pendant 4 heures et celle des particules après un traitement thermique à 1100°C pendant 4 heures.

2/ Matériau selon la revendication 1 caractérisé en ce que l'augmentation précitée est comprise entre 300 % et 800 %.

3/ Matériau selon la revendication 1 ou 2 caractérisé en ce que le second élément métallique ne donne pas de composé avec l'élément métallique de la matrice.

4/ Matériau selon la revendication 1 ou 2 caractérisé en ce que le second élément métallique se combine partiellement avec l'élément métallique de la matrice.

5/ Matériau selon l'une des revendications 1 à 4 caractérisé en ce que la concentration pondérale en oxyde du second élément dans le matériau est comprise entre 5 % et 70 %, la concentration en oxyde minéral constituant la matrice étant comprise entre 95 % et 30 %.

6/ Matériau selon la revendication 5 caractérisé en ce que la concentration en oxyde du second élément est comprise entre 7 % et 55 %.

7/ Matériau selon l'une des revendications précédentes caractérisé en ce que l'oxyde minéral constituant la matrice est choisi dans le groupe comprenant l'alumine, la silice, l'oxyde de zirconium, l'oxyde de titane ou un mélange de ceux-ci.

8/ Matériau selon l'une des revendications précédentes, caractérisé en ce que l'oxyde du second élément métallique est un oxyde d'un élément choisi dans le groupe comprenant les lanthanides, l'yttrium, le molybdène, le vanadium, les alcalino-terreux.

9/ Matériau selon la revendication 8 caractérisé en ce que le second élément métallique est un lanthanide ou un mélange de lanthanides, de préférence le cérium, le lanthane, le praséodyme, le néodyme.

10/Matériau selon la revendication 8 caractérisé en ce que le second élément est un alcalino-terreux, de préférence le baryum.

11/Matériau selon l'une des revendications précédentes caractérisé en ce que le second élément métallique est le cérium et en ce que la dimension moyenne des particules d'oxyde de cérium est comprise entre 15 et 35 nm après un traitement thermique à 1100°C pendant 4 heures et comprise entre 2,5 et 6 nm après un traitement thermique à 350°C pendant 4 heures.

12/Matériau selon la revendication 11, caractérisé en ce que la concentration pondérale en oxyde de cérium est comprise entre 5 % et 70 % avantageusement entre 7 % et 50 %.

13/Procédé de fabrication du matériau selon l'une des revendications précédentes, caractérisé en ce qu'il consiste à coprécipiter l'élément métallique formant la matrice et le second élément métallique sous forme d'un précurseur d'oxyde, à récupérer le matériau coprécipité et à le calciner après un séchage éventuel.

14/Procédé selon la revendication 13, caractérisé en ce qu'il consiste à réaliser une précipitation sous forme d'hydroxyle ou d'hydrate d'oxyde et en ce que la différence entre les pH de précipitation de chacun des éléments est inférieure à 0,5 unité pH.

15/Procédé selon la revendication 13 ou 14, caractérisé en ce qu'il comprend une étape de traitement hydrothermal du précipité, avant calcination.

**16/**Procédé selon la revendication 15, caractérisé en ce que le traitement hydrothermal est réalisé par un séchage du précipité avec élimination en continu des vapeurs émises.

**17/**Procédé selon la revendication 16 caractérisé en ce que le séchage est mis en oeuvre sous pression réduite pour éliminer les vapeurs émises.

**18/**Procédé selon la revendication 16 caractérisé en ce que le séchage est réalisé sous pression atmosphérique avec un entrainement des vapeurs émis par un balayage gazeux à la surface du précipité.

**19/**Procédé selon l'une des revendications 16 à 18, caractérisé en ce que la température de séchage est comprise entre 50°C et 150°C.

**20/**Procédé selon la revendication 17 caractérisé en ce que le séchage est réalisé sous une pression comprise entre 1000 Pa et 10000 Pa.

**21/**Procédé selon la revendication 15, caractérisé en ce que le traitement hydrothermal est réalisé sous une pression de vapeur d'eau, à une température comprise entre 30° C et 100° C pendant une durée inférieure à 2 heures.

**22/**Procédé selon la revendication 15, caractérisé en ce que le traitement hydrothermal est réalisé par mise en suspension du précipité dans de l'eau et maintien de la suspension à une température comprise entre 30° C et 100° C pendant une durée inférieure à 1 h 30.

**23/**Procédé selon l'une des revendications 21 ou 22 caractérisé en ce que le précipité est séché à une température comprise entre 80° C et 160° C.

**24/**Procédé selon l'une des revendications 21 ou 22, caractérisé en ce que le précipité est séché selon le procédé décrit dans l'une des revendications 16 à 20.

**25/**Procédé selon l'une des revendications 13 à 24 caractérisé en ce que le précipité est calciné à une température comprise entre 300° C et 1200° C.

**26/**Procédé de fabrication d'une composition selon l'une des revendications 13 à 25, caractérisé en ce qu'il consiste à :
- réaliser une solution de composés solubles d'élément métallique formant la matrice et de composés solubles du second élément,
- à mélanger cette solution avec une composition de précipitation comprenant des ions carbonates, oxalates et/ou carboxyles avec des ions hydroxyles.
- à séparer le précipité obtenu
- à soumettre le précipité ainsi séparé à un traitement hydrothermal
- à sécher éventuellement le produit, et
- à le calciner.

**27/**Procédé selon la revendication 26, caractérisé en ce que la composition de précipitation est un mélange d'ammoniaque et de carbonate d'ammonium.

**28/**Procédé selon la revendication 26 ou 27, caractérisé en ce que les composés solubles de l'élément formant la matrice sont choisis dans le groupe comprenant les nitrate, sulfate, chlorure.

**29/**Procédé selon l'une des revendications 26 à 27, caractérisé en ce que les composés solubles du second élément sont choisis dans le groupe comprenant nitrate et chlorure.

**30/**Procédé selon l'une des revendications 26 à 27, caractérisé en ce que la composition de précipitation est ajoutée dans une quantité stoechiométrique, avantageusement avec un excès de 5 à 10 % de celle-ci.

**31/**Procédé selon la revendication 30, caractérisé en ce que la composition de précipitation contient des ions carbonates et hydroxyles dans un rapport $CO_3^=/OH^-$ compris entre 0,25 et 4.

**32/**Procédé selon l'une des revendications 26 à 31, caractérisé en ce que la précipitation est réalisée de manière discontinue par additon de la composition de précipitation dans la solution de composés solubles, ou inversement.

**33/**Procédé selon l'une des revendications 26 à 31, caractérisé en ce que la précipitation est réalisée de manière continue.

**34/**Procédé selon l'une des revendications 26 à 33, caractérisé en ce que la précipitation est réalisée à une température comprise entre 20° C et 100° C.

**35/**Procédé selon l'une des revendications 26 à 34, caractérisé en ce que la séparation du précipité est réalisée par filtration ou centrifugation.

**36/**Procédé selon la revendication 35, caractérisé en ce que le précipité séparé est lavé.

Fig. 1

Office européen
des brevets

**RAPPORT DE RECHERCHE EUROPEENNE**

Numero de la demande

EP  91 40 1428

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | CHEMICAL ABSTRACTS, vol. 104, no. 14, avril 1986, abrégé no. 112239g, Columbus, Ohio, US; & JP-A-60 226 414 (HITACHI LTD) 11-11-1985 | 1-3,5-9 ,13-16, 25 | B 01 J  37/03<br>C 01 B  13/36<br>C 01 F  17/00  //<br>C 04 B  38/00 |
| A | IDEM | 26,28, 29,32, 34-36 | |
| X | CHEMICAL ABSTRACTS, vol. 66, no. 6, 1967, abrégé no. 25540b, Columbus, Ohio, US; A.M. GOLUB et al.: "Production of lanthanum aluminate by coprecipitation", & IZV. AKAD. NAUK SSSR, NEORG. MATER. 2(9), 1608-11(1966) | 1-2,4,7 -9,13, 25 | |
| X | CHEMICAL ABSTRACTS, vol. 99, no. 12, 1983, page 648, abrégé no. 98113f, Columbus, Ohio, US; V.B. GLUSHKOVA et al.: "Synthesis of yttrium aluminates by the coprecipitation of hydroxides", & IZV. AKAD. NAUK SSSR, NEORG. MATER. 1983, 19(7), 1126-8 | 1-2,4,7 ,8,13, 14,25 | **DOMAINES TECHNIQUES RECHERCHES (Int. Cl.5)** |
| A | CHEMICAL ABSTRACTS, vol. 107, no. 22, novembre 1987, page 181, abrégé no. 201444z, Columbus, Ohio, US; & JP-A-62 187 111 (NIPPON SHOKUBAI KAGAKU KOGYO CO., LTD) 15-08-1987 | 1,11,12 ,15,16 | C 01 B  I3<br>C 01 F  17<br>B 01 J  37<br>C 04 B  38<br>C 04 B  35 |
| A | GB-A-1 037 502  (PECHINEY-SAINT-GOBAIN) * Revendication 8 * | 15-17, 19 | |
| A | EP-A-0 254 574  (NIPPON STEEL) * Revendication 6 * | 27 | |
| A | US-A-4 181 532  (J.L. WOODHEAD) | | |

Le présent rapport a été établi pour toutes les revendications

| Lieu de la recherche | Date d'achèvement de la recherche | Examinateur |
|---|---|---|
| LA HAYE | 12-09-1991 | DAELEMAN P.C.A. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
----------------------------------------------
& : membre de la même famille, document correspondant

EPO FORM 1503 03.82 (P0402)